# EUROPÄISCHE PATENTSCHRIFT

(11) **EP 0 553 330 B1**
(45) Veröffentlichungstag und Bekanntmachung des Hinweises auf die Patenterteilung: **15.03.1995**
(21) Anmeldenummer: 92917634.5
(22) Anmeldetag: 19.08.1992
(51) Int. Cl.: B23B 31/08

(54) **WERKZEUGHALTER FÜR WERKZEUGMASCHINEN**
TOOL HOLDER FOR MACHINE TOOLS
PORTE-OUTILS POUR MACHINES-OUTILS

(30) Priorität: 20.08.1991 DE 4127484
(43) Veröffentlichungstag der Anmeldung: 04.08.1993
(73) Patentinhaber: WELLACH, Peter, 48712 Gescher (DE)
(72) Erfinder: WELLACH, Adolf, D-48712 Gescher (DE)
(74) Vertreter: Zenz, Joachim Klaus, Dipl.-Ing.
(86) Internationale Anmeldenummer: EP9201893
(87) Internationale Veröffentlichungsnummer: WO9303875

(56) Entgegenhaltungen:
- DE-U- 8 308 120
- DE-U- 8 913 215
- US-A- 3 072 417

## Beschreibung

Die Erfindung betrifft einen Werkzeughalter für Werkzeugmaschinen mit einem maschinenseitigen und einem werkzeugseitigen Halterteil und mit einer die Halterteile mit radialem Spiel drehfest miteinander verbindenden Kupplungseinrichtung, die über Wälzkörper in Axialrichtung beidseitig abgestützt ist und eine radial bewegbare Kupplungsscheibe mit mindestens zwei senkrecht zueinander verlaufenden radialen Schlitzen aufweist, wobei in den einen Schlitz ein axialer Mitnehmer des einen Halterteils und in den anderen Schlitz ein axialer Mitnehmer des anderen Halterteils eingreift.

Derartige Werkzeughalter werden immer dort eingesetzt, wo bereits vorhandene Bohrungen mit hoher Genauigkeit bearbeitet werden müssen. Beispielsweise dienen sie zur Aufnahme von Gewindeschneidwerkzeugen und vor allen Dingen von Reibahlen. Die Kupplungseinrichtung, die auch unter der Bezeichnung Oldham-Kupplung bekannt ist, gleicht einen etwaigen Achsversatz zwischen dem Werkzeug und der zu bearbeitenden Bohrung aus, und zwar unter Ausnutzung des von der Kupplungseinrichtung gewährleisteten radialen Spiels zwischen dem an der Werkzeugmaschinen befestigten Kalterteil und dem das Werkzeug aufnehmenden Halterteil. Die Wälzkörper dienen dazu, diese Radialbewegungen leichtgängig zu machen. Für den Fall, daß das Werkzeug stillsteht und das Werkstück umläuft, kommt es zu einer einmaligen Einstellbewegung pro Bohrung. Im umgekehrten Fall ruft jede Drehung des Werkzeugs eine zyklische Einstellbewegung hervor.

Bei einem bekannten Werkzeughalter der eingangs genannten Art (DE-AS 12 56 039) sind die Wälzkörper als Kugeln ausgebildet. Kugeln besitzen hervorragende Laufeigenschaften. Allerdings sind sie mit dem Nachteil behaftet, daß die auftretenden Axialkräfte durch Punktberührung übertragen werden müssen. Diese Axialkräfte sind erheblich, bedingt durch die hohen Vorschubgeschwindigkeiten, mit denen moderne Werkzeugmaschinen arbeiten. Unter diesen Belastungen verletzten die Kugeln die zugehörigen Gegenflächen, und zwar jeweils auf sehr kleinen Bereichen, da die Radialbewegungen gering sind. Dadurch vermindert sich die Leichtgängigkeit der Kupplung. In Extremfällen kommt es zu einem vollständigen Blockieren.

Um dies zu verhindern, verwendet ein weiterer bekannter Werkzeughalter (DE-PS 34 25 869) eine Kupplungsscheibe, deren axiale Flächen als Gleitflächen ausgebildet sind. Diese Kupplung arbeitet praktisch verschleißfrei, wobei ihre Leichtgängigkeit für die Bearbeitung von Stahl und anderen Metallen vergleichbarer Härte ohne weiteres ausreicht. Es wurde jedoch gefunden, daß Schwierigkeiten bei der Bearbeitung von Metallen geringerer Härte auftreten können, beispielsweise bei Leichtmetallen, wie etwa Aluminium und dessen Legierungen. Wenn sich hier die radiale Einstellbewegung auch nur geringfügig verzögert, kommt es bereits zu Ungenauigkeiten` zumindest im Eingangsbereich der Bohrung. Derartige Ungenauigkeiten können beispielsweise in der Luftfahrttechnik, etwa beim Aufreiben von Nietlöchern, nicht toleriert werden.

Der Erfindung liegt daher die Aufgabe zugrunde, eine Vorrichtung der eingangs genannten Art zu schaffen, die im wesentlichen verschleißfrei arbeitet und eine hohe Leichtgängigkeit während langer Standzeiten besitzt.

Zur Lösung dieser Aufgabe ist der Werkzeughalter der eingangs genannten Art nach der Erfindung dadurch gekennzeichnet, daß die Wälzkörper als Rollen ausgebildet sind.

Es wurde gefunden, daß der Übergang von der Punktberührung der Kugeln auf die Linienberührung der Rollen ausreicht, auch extreme Axialkräfte ohne Verletzung der ebenen Laufflächen zu übertragen, und zwar auch bei Langzeiteinsatz.

Überraschenderweise hat es sich gezeigt, daß dies im wesentlichen unabhängig ist von der Orientierung der Rollen. Auch wenn die Rollen Gleitbewegungen durchführen, bleiben die Laufflächen unbeschädigt. Wichtig dabei ist vor allen Dingen, daß auch die Leichtgängigkeit des Radialausgleichs nur unwesentlich beeinträchtigt wird.

So bietet es sich an, die Rollen in Weiterbildung der Erfindung in Ausnehmungen der Kupplungsscheibe anzuordnen, wobei zwangsläufig Gleitbewegungen der Rollen bei bestimmten Bewegungsrichtungen auftreten.

Dabei sind die Rollen vorzugsweise parallel zueinander ausgerichtet.

Eine ebenfalls bevorzugte Alternative sieht vor, die Rollen satzweise parallel zueinander auszurichten. Man kann die Achsen der Rollen hierzu in Umfangsrichtung oder in Radialrichtung orientieren. Die Ausrichtung der Rollenachsen bezüglich der Richtung der beiden radialen Schlitze der Kupplungsscheibe ist in jedem Falle von sekundärer Bedeutung.

Abweichend von der Anordnung der Rollen in den Ausnehmungen der Kupplungsscheibe sieht eine wesentliche Weiterbildung der Erfindung vor, daß die Kupplungsscheibe beidseitig mit axialen Flächen auf den Rollen abgestützt ist und daß die Rollen jeder Seite parallel zueinander ausgerichtet sind, wobei ihre Achsen senkrecht zur Bewegungsrichtung der Kupplungsscheibe bezüglich des Mitnehmers des zugehörigeren Halterteils stehen. Unter diesen Umständen finden sämtliche möglichen Bewegungen in Laufrichtung der jeweiligen Rollen statt. Dies gilt sowohl bezüglich derjenigen Bewegungen, die die Kupplungsscheibe relativ zu einem der Halterteile durchführt, als auch bezüglich derjenigen Bewegungen, die der andere Halterteil relativ zur Kupplungsscheibe durchführt. Für jede dieser Bewegungen ist ein gesonderter Satz von Rollen mit entsprechend orientierten Achsen vorhanden.

Dabei ist es besonders vorteilhaft, die Rollen jeder Seite in einem Käfig anzuordnen, der mindestens einen axialen Schlitz für den Durchtritt des Mitnehmers des zugehörigen Halterteils aufweist und mit Ausnehmungen für die Rollen versehen ist, die parallel zueinander und senkrecht zu dem radialen Schlitz ausgerichtet sind. Die Rollen werden sicher geführt, wobei die Käfige frei sind, Eigenbewegungen durchzuführen, und zwar in der-jenigen Richtung, in der auch die Bewegung zwischen der Kupplungsscheibe und dem zugehörigen Halterteil stattfindet.

In Weiterbildung der Erfindung wird ferner vorgeschlagen, daß jeder Käfig vier um 90° gegeneinander versetzte radiale Schlitze aufweist, zwischen denen vier Ausnehmungen für die Rollen verteilt sind, die senkrecht zu einem der Schlitzpaare ausgerichtet sind. Unter diesen Umständen können die beiden Käfige zur Drehmomentübertragung herangezogen werden. Die Funktion der Kupplungsscheibe läßt sich auf die einer Stützscheibe zwischen den beiden Rollensätzen reduzieren. Dabei ergibt sich ferner eine gewichtsmäßig günstige Konstruktion. Letzteres gilt insbesondere auch dann, wenn, wie es als Weiterbildung der Erfindung vorgeschlagen wird, die Käfige als Ringscheiben ausgebildet sind. Auf dieses Merkmal wird man im übrigen auch dann zurückgreifen, wenn,beispielsweise im Falle eines Reibahlenhalters, Kühlmittel zentral durch den Werkzeughalter geleitet wird.

Die Käfige für die beiden Rollensätze können dieselbe Form haben und sich nur durch ihre Einbaulage unterscheiden.

Vorteilhafterweise ist der eine Halterteil gegen den anderen Halterteil elastisch verspannt, wobei die Federkraft unter Zwischenschaltung eines Kugellagers übertragen wird. Durch die elastische Vorspannung wird sichergestellt, daß sich die Rollen in unbelastetem Zustand nicht verkanten können, wobei das Kugellager dafür sorgt, daß das Aufbringen der Federkraft keine Behinderungen der Kompensationsbewegungen bewirkt.

Bevorzugte Ausführungsbeispiele der Erfindung werden im folgenden anhand der beiliegenden Zeichnung näher erläutert. Die Zeichnung zeigt in:
Fig. 1 einen axialen Schnitt durch einen Werkzeughalter an dem die Erfindung ausgebildet ist;
Fig. 2 die in der Vorrichtung nach Figur 1 verwendete Kupplungsscheibe;
Fig. 3 einen der in der Vorrichtung nach Figur 1 verwendeten Käfige;
Fig. 4 eine Kupplungsscheibe für eine abgewandelte Ausführungsform.

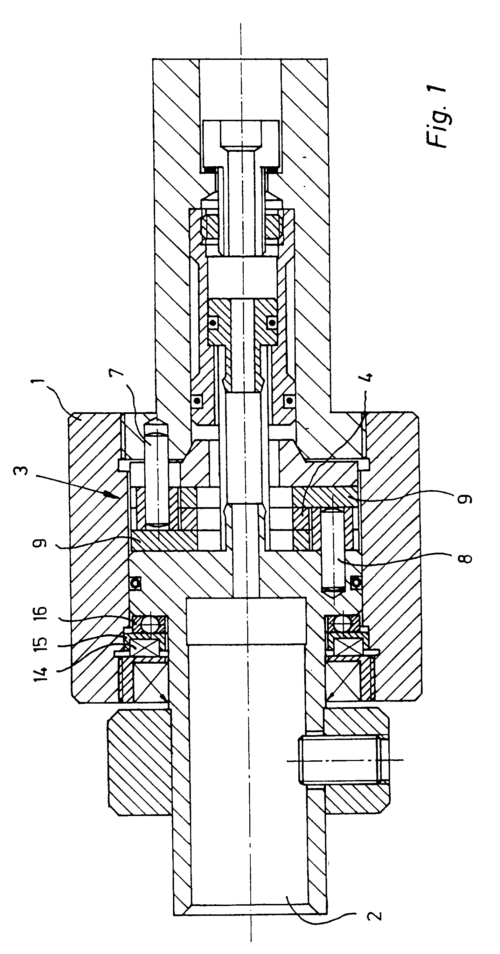

Der Werkzeughalter nach Figur 1 weist einen maschinenseitigen Halterteil 1 auf, der in den Antrieb der Maschine eingesteckt werden kann. Der Halterteil 1 ist mit einem werkzeugseitigen Halterteil 2 verbunden, der zur Aufnahme des Werkzeugs, im vorliegenden Falle einer Reibahle, dient. Zum Ausgleich eines etwaigen Achsversatzes zwischen dem Werkzeug und der aufzureibenden Bohrung kann der Halterteil 2 relativ zum Halterteil 1 geringfügige radiale Bewegungen durchführen. Diese Radialbewegungen werden von einer Kupplungseinreichung 3 zugelassen, die gleichzeitig dazu dient, die Axialkräfte vom Halterteil 1 auf den Halterteil 2 zu übertragen.

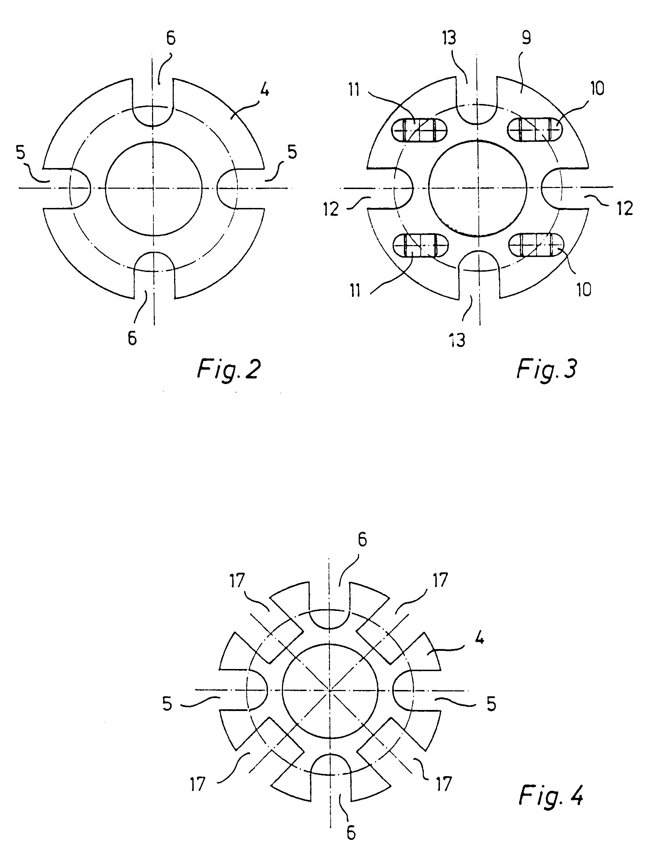

Die Kupplungseinrichtung 3 umfaßt vor allem eine Kupplungsscheibe 4, deren Form sich am besten aus Figur 2 ergibt. Die Kupplungsscheibe weist zwei Paare von radialen Schlitzen 5 und 6 auf, die um 90° gegeneinander versetzt sind. In die Schlitze 5 greift ein Paar von Bolzen 7 des maschinenseitigen Halterteils 1 ein, während die Schlitze 6 mit einem Paar von Bolzen 8 des werkzeugsseitigen Halterteils im Eingriff stehen. Insoweit ist die Darstellung der Mitnehmer 7 und 8 in Figur 1 um 90° versetzt.

Beidseitig der Kupplungsscheibe 4 sind Käfige 9 vorgesehen, von denen einer in Figur 3 dargestellt ist. Er weist vier Ausnehmungen 10 zur Führung von Rollen 11 auf. Ferner sind zwei Paare von um 90° gegeneinander versetzten Schlitzen 12 und 13 vorgesehen. Die Rollen 11 sind parallel zueinander ausgerichtet, wobei ihre Achsen senkrecht zu den radialen Schlitzen 13 verlaufen. Bei Radialbewegungen in Richtung dieser Schlitze wird also der Abrolleffekt der Rollen 11 wirksam.

Die beiden Käfig 9 sind identisch ausgebildet, jedoch um 90° versetzt montiert. Sämtliche Bewegungen der Kupplungseinrichtung 3 erfolgen also unter Mitwirkung der Rollen 11. Daraus ergibt sich eine extrem leichtgängige Einstellung, und zwar auch unter gleichzeitiger Übertragung hoher Axialkräfte. Selbst bei Langzeitbetrieb kommt es nicht zu einer Beschädigung der Laufflächen auf der Kupplungsscheibe 4 bzw. den jeweils zugehörigen Halterteilen.

Die radialen Schlitze 12 in den Käfigen 9 sind zur Gewichtsentlastung vorgesehen. Bei einer abgewandelten Ausführungsform können sie auch dem Eingriff des gegenüberliegenden Mitnehmerpaares dienen, wobei die Käfige dann zur Drehmomentübertragung herangezogen werden.

Um dafür zu sorgen, daß die Rollen auch in unbelastetem Zustand unter geringer Vorspannung stehen und dementsprechend nicht vekippen können, sind Federelemente 14 - im vorliegenden Fall aus Kunststoff - vorgesehen, die sich am maschinenseitigen Halterteil 1 abstützen und den werkzeugseitigen Halterteil 2 gegen den Halterteil 1 verspannen. Die Federkraft wird unter Zwischenschaltung eines Ringes 15 und eines Kugellagers 16 übertragen. Das Kugellager 16 sorgt dafür, daß die Kompensationsbewegungen durch die Vorspannung nicht behindert werden.

Um die Reibahle zu kühlen, ist der Werkzeughalter mit einer zentralen Kühlmittelführung versehen. Dementsprechend sind die Käfige 9, ebenso wie die Kupplungsscheibe 4, als Ringscheiben ausgebildet.

Figur 4 zeigt eine Kupplungsscheibe 4 für eine abgewandelte Ausführungsform. Auch diese Kupplungsscheibe ist mit Paaren von radialen Schlitzen 5 und 6 für den Eingriff der Paare von Mitnehmern 7 bzw. 8 versehen. Ferner sind in die Kupplungsscheibe 4 radiale Ausnehmungen 17 eingearbeitet, die nicht dargestellte Rollen aufnehmen. Die Kupplungsscheibe dient hier also als Käfig für die Rollen, die direkt zwischen den Auflageflächen der beiden Halterteile 1 und 2 wirksam werden. Auch diese Konstruktion zeichnet sich durch lange Standzeiten aus. Zwar führen die Rollen kombinierte Roll- und Gleichbewegungen aus, jedoch wird hierdurch die Leichtgängigkeit nur unwesentlich vermindert. Vor allen Dingen bleibt sie über der Zeit im wesentlichen konstant.

Sämtliche Rollen können mit ihren Achsen parallel zueinander ausgerichtet sein. Auch besteht die Möglichkeit, sie satzweise parallel auszurichten. Dabei können sämtliche Rollenachsen radial orientiert sein. Sie können aber auch jeweils in Umfangsrichtung verlaufen.

Im übrigen ist die Erfindung auch anwendbar im Zusammenhang mit Werkzeughaltern, die in der Lage sind, außer dem Achsversatz auch einen Winkelversatz zwischen dem Werkzeug und der zu bearbeitenden Bohrung zu kompensieren.

Im Rahmen der Erfindung sind durchaus Abwandlungsmöglichkeiten der beschriebenen Ausführungsformen gegeben. So kann jeder Halterteil mit einem einzigen Mitnehmer arbeiten, wobei dann die Kupplungsscheibe mit zwei radialen Schlitzen auskommt, während für die Käfige ein einziger radialer Schlitz genügt. Je nach den Platzverhältnissen kann die Anzahl der Rollen auch sechs betragen. Bei der Kupplungsscheibe nach Figur 4 besteht die Möglichkeit, die Rollen so zu orientieren, wie es in Figur 3 gezeigt ist. Sodann tritt in einer definierten Richtung nur Rollbewegung und in der anderen definierten Richtung nur Gleitbewegung auf.

## Patentansprüche

1. Werkzeughalter für Werkzeugmaschinen mit einem maschinenseitigen (1) und einem werkzeugseitigen (2) Halterteil und mit einer die Halterteile mit radialem Spiel drehfest miteinander verbindenden Kupplungseinrichtung (3), die über Wälzkörper (11) in Axialrichtung beidseitig abgestützt ist und eine radial bewegbare Kupplungsscheibe (4) mit mindestens zwei senkrecht zueinander verlaufenden radialen Schlitzen (5, 6) aufweist, wobei in den einen Schlitz ein axialer Mitnehmer (8) des einen Halterteils und in den anderen Schlitz ein axialer Mitnehmer (7) des anderen Halterteils eingreift,
**dadurch gekennzeichnet**,
daß die Wälzkörper als Rollen (11) ausgebildet sind.

2. Werkzeughalter nach Anspruch 1, dadurch gekennzeichnet, daß die Rollen in Ausnehmungen (17) der Kupplungsscheibe (4) angeordnet sind.

3. Werkzeughalter nach Anspruch 2, dadurch gekennzeichnet, daß die Rollen parallel zueinander ausgerichtet sind.

4. Werkzeughalter nach Anspruch 2, dadurch gekennzeichnet, daß die Rollen satzweise parallel zueinander ausgerichtet sind.

5. Werkzeughalter nach Anspruch 1, dadurch gekennzeichnet, daß die Kupplungsscheibe (4) beidseitig mit axialen Flächen auf den Rollen (11) abgestützt ist und daß die Rollen jeder Seite parallel zueinander ausgerichtet sind, wobei ihre Achsen senkrecht zur Bewegungsrichtung der Kupplungsscheibe bezüglich des Mitnehmers (7; 8) des zugehörigen Halterteils (1; 2) stehen.

6. Werkzeughalter nach Anspruch 5, dadurch gekennzeichnet, daß die Rollen (11) jeder Seite in einem Käfig (9) angeordnet sind, der mindestens einen radialen Schlitz (12; 13) für den Durchtritt des Mitnehmers (7; 8) des zugehörigen Halterteils (1; 2) aufweist und mit Ausnehmungen (10) für die Rollen (11) versehen ist, die parallel zueinander und senkrecht zu dem radialen Schlitz ausgerichtet sind.

7. Werkzeughalter nach Anspruch 6, dadurch gekennzeichnet, daß jeder Käfig (9) vier um 90° gegeneinander versetzte radiale Schlitze (12; 13) aufweist, zwischen denen vier Ausnehmungen (10) für die Rollen (11) verteilt sind, die senkrecht zu einem der Schlitzpaare ausgerichtet sind.

8. Werkzeughalter nach Anspruch 6 oder 7, dadurch gekennzeichnet, daß die Käfige (5) als Ringscheiben ausgebildet sind.

9. Werkzeughalter nach einem der Ansprüche 1 bis 8, dadurch gekennzeichnet, daß der eine Halterteil (2) gegen den anderen Halterteil (1) elastisch verspannt ist, wobei die Federkraft unter Zwischenschaltung eines Kugellagers (16) übertragen wird.

## Claims

1. Tool holder for machine tools with a mounting portion on the machine side (1) and on the tool side (2) and with a coupling device (3) which rotationally fixedly connects the mounting portions together with radial play and which is supported on both sides in the axial direction by means of rolling bodies and has a radially movable coupling disc (4) with at least two slots (5,6) extending radially perpendicular to one another, whereby an axial carrier (8) on one mounting portion engages in one slot and an axial carrier (7) on the other mounting portion engages in the other slot, characterised in that the rolling bodies are constructed as rollers (11).

2. Tool holder as claimed in claim 1, characterised in that the rollers are arranged in recesses (17) in the coupling disc (4).

3. Tool holder as claimed in claim 2, characterised in that the rollers are aligned parallel to one another.

4. Tool holder as claimed in claim 2, characterised in that the rollers are arranged parallel to one another in sets.

5. Tool holder as claimed in claim 1, characterised in that the coupling disc (4) is supported on both sides on the rollers (11) with axial surfaces and that the rollers in each side are aligned parallel to one another, whereby their axes extend perpendicular to the direction of movement of the coupling disc with respect to the carrier (7;8) of the associated mounting portion (1;2).

6. Tool holder as claimed in claim 5, characterised in that the rollers (11) on each side are arranged in a cage (9) which has at least one radial slot (12;13), through which the carrier (7;8) on the associated mounting portion can pass, and is provided with recesses (10) for the rollers (11) which are aligned parallel to one another and perpendicular to the radial slot.

7. Tool holder as claimed in claim 6, characterised in that each cage (9) has four radial slots (12;13), which are offset from one another by 90° and between which are distributed four recesses (10) for the rollers (11) which are aligned perpendicular to one of the pairs of slots.

8. Tool holder as claimed in claim 6 or 7, characterised in that the cages (5) are constructed as annular discs.

9. Tool holder as claimed in one of claims 1 to 8, characterised in that one mounting portion (2) is elastically biased towards the other mounting portion (1), the spring force being transmitted with the interposition of a ball bearing (16).

## Revendications

1. Porte-outil pour machines-outils, comportant une partie côté machine (1) et une partie côté outil (2) et un dispositif d'accouplement (3) reliant ces parties avec jeu radial mais de façon qu'elles soient solidaires en rotation et qui est supporté des deux côtés en direction axiale par des corps roulants (11) et présente un disque d'accouplement mobile radialement (4) ayant au moins deux fentes radiales perpendiculaires (5, 6), un entraîneur axial (8) d'une des parties du porte-outil étant engagé dans une de ces fentes et un entraîneur axial (7) de l'autre partie du porte-outil étant engagé dans l'autre, caractérisé par le fait que les corps roulants sont des rouleaux (11).

2. Porte-outil selon la revendication 1, caractérisé par le fait que les rouleaux sont placés dans des évidements (17) du disque d'accouplement (4).

3. Porte-outil selon la revendication 2, caractérisé par le fait que les rouleaux sont disposés parallèlement.

4. Porte-outil selon la revendication 2, caractérisé par le fait que les rouleaux sont disposés parallèlement par groupes.

5. Porte-outil selon la revendication 1, caractérisé par le fait que le disque d'accouplement (4) s'appuie des deux côtés sur les rouleaux (11) par des faces axiales et que les rouleaux de chaque côté sont disposés parallèlement, leurs axes étant perpendiculaires à la direction de mouvement du disque d'accouplement par rapport à l'entraîneur (7 ; 8) de la partie associée (1; 2) du porte-outil.

6. Porte-outil selon la revendication 5, caractérisé par le fait que les rouleaux (11) de chaque côté sont placés dans une cage (9) qui présente au moins une fente radiale (12 ; 13) pour le passage de l'entraîneur (7 ; 8) de la partie associée (1 ; 2) du porte-outil et est pourvue d'évidements (10) pour les rouleaux (11) qui sont parallèles et dirigés perpendiculairement à la fente radiale.

7. Porte-outil selon la revendication 6, caractérisé par le fait que chaque cage (9) présente quatre fentes radiales (12 ; 13) espacées de 90°, entre lesquelles sont répartis quatre évidements (10) pour les rouleaux (11) qui sont dirigés perpendiculairement à une des paires de fentes.

8. Porte-outil selon l'une des revendications 6 et 7, caractérisé par le fait que les cages (5) sont des disques annulaires.

9. Porte-outil selon l'une des revendications 1 à 8, caractérisé par le fait qu'une partie (2) de celui-ci est liée élastiquement à l'autre partie (1), la force élastique étant transmise avec intercalation d'un roulement à billes (16).
